# EUROPÄISCHE PATENTSCHRIFT

(11) **EP 3 900 804 B1**
(45) Veröffentlichungstag und Bekanntmachung des Hinweises auf die Patenterteilung: **04.10.2023**
(21) Anmeldenummer: 21167782.8
(22) Anmeldetag: 12.04.2021
(51) Int. Cl.: B01D 29/15, B01D 29/68, B24B 55/12, B01D 35/027

(54) **FILTER UND FILTERVORRICHTUNG ZUR FILTRATION EINER FESTSTOFFPARTIKEL ENTHALTENDEN WÄSSRIGEN FLÜSSIGKEIT**
FILTER AND FILTER DEVICE FOR FILTERING AN AQUEOUS LIQUID CONTAINING SOLID PARTICLES
FILTRE ET DISPOSITIF FILTRE DESTINÉS À LA FILTRATION D'UN LIQUIDE AQUEUX CONTENANT DES PARTICULES SOLIDES

(30) Priorität: 24.04.2020 DE 102020111295
(43) Veröffentlichungstag der Anmeldung: 27.10.2021
(73) Patentinhaber: Wardakant GmbH, 25557 Hanerau-Hademarschen (DE)
(72) Erfinder: Warda, Niklas, 25557 Hanerau-Hademarschen (DE)
(74) Vertreter: Weidner Stern Jeschke

(56) Entgegenhaltungen:
- WO-A1-02/20122
- DE-A1- 3 801 686
- DE-A1-102004 053 671
- DE-T2- 60 013 793
- US-A- 5 490 924

## Beschreibung

Die Erfindung betrifft einen Filter und eine Verwendung des Filters in einer Filtervorrichtung zur Filtration einer Feststoffpartikel enthaltenden wässrigen Flüssigkeit, insbesondere einer beim Schleifen von Linsen in Optikerbetrieben anfallenden wässrigen Schleifflüssigkeit, gemäß dem Oberbegriff des Anspruchs 1 sowie gemäß Anspruch 6.

Beim Schleifen von Brillengläsern in Optikerbetrieben wird die beim Schleifen zur Kühlung dienende wässrige Schleifflüssigkeit zusammen mit den mitgeführten Schleifabfällen gewöhnlich ohne eine vorherige Aufbereitung ins Abwasser eingeleitet. Es wird geschätzt, dass allein in Deutschland auf diese Weise 300 bis 350 t Schleifabfälle in Form von Mikropartikeln aus Glas oder Kunststoff ins Abwasser abgeleitet werden. Da die Mikropartikel zumindest zum Teil von dort in die Umgebung gelangen, ist wegen der Mikroplastik-Problematik mit einem zukünftigen Verbot derartiger Einleitungen zu rechnen.

Aus der DE 43 368 24 A1 ist es zur Aufbereitung von wässriger, beim Schleifen von Brillengläsern anfallender, mit Partikeln aus Glas angereicherter Schleifflüssigkeit bereits bekannt, die verunreinigte Schleifflüssigkeit zur Abscheidung der Partikel einer Zentrifuge zuzuführen. Allerdings werden mit Hilfe der Zentrifuge dort nur Glas-Partikel aus der Schleifflüssigkeit abgeschieden, während beim Bearbeiten von Brillenfassungen oder Linsen aus Kunststoff anfallende Kunststoffpartikel nicht aus der wässrigen Schleifflüssigkeit abgeschieden werden, vermutlich wegen des erheblich geringeren Dichteunterschieds.

Ähnliche Probleme treten auch bei der Entsorgung von anderen wässrigen, nicht-brennbaren oder nicht-ätzenden Flüssigkeiten auf, die bei schleifenden oder spanabhebenden Fertigungsverfahren zur Kühlung von Werkzeugen und Werkstücken und/oder zur Beseitigung des Materialabtrags eingesetzt werden.

Dabei ist es grundsätzlich zwar bereits bekannt, Feststoffpartikel durch Filtration aus solchen oder ähnlichen wässrigen Flüssigkeiten abzuscheiden, jedoch ist es bei den dazu verwendeten Filtern und Filtervorrichtungen in der Regel nötig, das Filtermaterial im Filterelement von Zeit zu Zeit auszutauschen, was relativ zeit- und arbeitsaufwändig ist.

Die DE 10 2004 053 671 A1 offenbart eine Vorrichtung zur Trennung eines Phasengemisches aus einer festen Phase und einer mit Spänen versetzten Kühlschmierflüssigkeit mit einem in einem ersten Betriebsmodus von der flüssigen Phase durchströmten Filterelement, wobei eine Fördereinheit zum Fördern des Phasengemisches vorgesehen ist und ein druckbeaufschlagtes Gas umfassender Druckgasspeicher zum Rückspülen des Filterelementes in einem zweiten Betriebsmodus mit gefilterter flüssiger Phase vorgesehen ist, wobei die Fördereinheit als Druckerzeugungseinheit zum Druckbeaufschlagen des Gases ausgebildet ist. Das Filterelement ist geschlossen, insbesondere zylinderförmig ausgebildet.

Gemäß DE 600 13 793 T2 umfasst eine kombinierte Pumpen- und Filter- Anordnung in Stromfolge: a) einen Einlass, der mit einer Flüssigkeitsquelle in Verbindung steht und Flüssigkeitsstrom einlässt, b) eine Filteranordnung, die den Flüssigkeitsstrom filtert, c) eine Hauptpumpe, die mit einem Hauptpumpenantrieb verbunden ist, d) einen Hauptauslass, der mit der Hauptpumpe verbunden ist und durch den Flüssigkeit, die durch den Einlass und die Filteranordnung eingelassen wurde, durch Betätigung der Hauptpumpe als Hauptausgangsstrom ausgelassen wird, wobei die Anordnung ferner ein Rückspülmittel enthält, dem ein Strom von Rückspülflüssigkeit zugeführt wird und das im Gebrauch zum Rückspülen des Filters angeordnet ist, um Fremdstoffe von dem Filter zu entfernen; wobei die Pumpen- und Filter-Anordnungen in einer einzigen Einheit kombiniert sind, und nur eine Rückspülpumpe vorgesehen ist, die im Gebrauch so angeordnet ist, dass sie dem Rückspülmittel Rückspülflüssigkeit zuführt. Eine Filtersiebanordnung erstreckt sich um einen Großteil des Umfangs oder den gesamten Umfang des Gehäuses der Filteranordnung anstelle der Gehäusewand.

Die WO 02/20122 A1 beschreibt eine Vorrichtung zur Filtration von verunreinigten Flüssigkeiten, bei der ein Filter zwischen einem äußeren Filterraum und einem inneren Filterraum angeordnet ist und im inneren Filterraum zum Rückspülen mehrere Flüssigkeitsdüsen auf einem drehbaren Karussell angeordnet sind, deren Strahlen innen gegen den Filter gerichtet sind. Der Filter ist vorzugsweise hohlkreiszylinderförmig ausgebildet.

Die US 5 490 924 A offenbart ein System zur Entfernung von partikulären Substanzen aus einer kontaminierten Flüssigkeit, welches einen zylindrischen Filtertank aufweist, in dem ein zylindrisches Filtersieb auf den Umfang eines zylindrischen Skelettfilterrahmens von außen montiert ist.

Die DE 38 01 686 A1 beschreibt einen Sandfilter mit einer zwischen zwei Scheidewänden sandwichartig angeordneten Sandschicht, wobei jede Scheidewand Schlitze zum Durchtritt einer Flüssigkeit von außen nach innen aufweist, feine Schmutzpartikel durch die Scheidewand hindurchgelangen und in der Sandschicht abgefangen werden.

Ausgehend hiervon liegt der Erfindung die Aufgabe zugrunde, einen Filter und eine Verwendung des Filters in einer Filtervorrichtung der eingangs genannten Art dahingehend zu verbessern, dass nicht nur eine Selbstreinigung des Filterelements möglich und so ein zeit- und arbeitsaufwändiger manueller Austausch des Filtermaterials im Filterelement entbehrlich ist, sondern dass zudem für die Selbstreinigung kein Rotorantrieb benötigt wird und die Lebensdauer des Filterelements bei geringen Kosten vergrößert werden kann, was insbesondere bei der eingangs genannten Verwendung von Vorteil ist.

Zur Lösung dieser Aufgabe werden erfindungsgemäß ein Filter mit den Merkmalen im Kennzeichenteil des Anspruchs 1 sowie eine Filtervorrichtung mit den Merkmalen des Anspruchs 7 vorgeschlagen.

Die Aufgabe wird gelöst durch ein Filter zur Filtration einer Feststoffpartikel enthaltenden wässrigen Flüssigkeit, insbesondere einer beim Schleifen von Linsen in Optikerbetrieben anfallenden Schleifflüssigkeit, mit einem hohlzylindrischen, bei der Filtration von außen nach innen von der Flüssigkeit durchströmten Filterelement, sowie einem im Inneren des Filterelements angeordneten, mit Spülöffnungen versehenen drehbaren Rotor zum Rückspülen des Filterelements, wobei Filtrat unter Druck in den Rotor zuführbar ist, um durch das aus den Spülöffnungen austretende Filtrat den Rotor hydraulisch anzutreiben und das Filtrat während der Drehung des Rotors zum Entfernen von Feststoffpartikeln von der Außenseite des Filterelements gegen die Innenseite des Filterelements zu spritzen, wobei das Filterelement ein von einem zylindrischen Filterkäfig gehaltenes Filtermaterial umfasst, das von einem röhrenförmig gebogenen ebenen Filtergewebe gebildet wird, dessen benachbarte Ränder sich überlappen.

Die erfindungsgemäße Merkmalskombination gestattet es, die bei der Filtration bzw. im Filtrationsbetrieb an der Außenseite des Filterelements angelagerten Feststoffpartikel bei Bedarf zu entfernen, indem beim Rückspülen bzw. im Rückspülbetrieb Filtrat, d.h. zuvor bereits filtrierte bzw. gereinigte Flüssigkeit, unter Druck in den Rotor zugeführt wird, um mittels des aus den Spülöffnungen des Rotors austretenden Filtrats einerseits den Rotor hydraulisch drehend anzutreiben und andererseits die an der Außenseite des Filterelements haftenden Feststoffpartikel mittels des auf die Innenseite des Filterelements auftreffenden und dabei zum Teil durch das Filtermaterial hindurchtretenden Filtrats durch Rückspülung abzuspülen und so das Filterelement von den anhaftenden Feststoffpartikeln zu befreien. Da der Betrieb ohne die Notwendigkeit von Filterwechseln automatisiert werden kann und auch kein anderes Verbrauchsmaterial benötigt wird, sind der Zeit- und Arbeitsaufwand ebenso wie die Betriebskosten gering.

Eine bevorzugte Ausgestaltung der Erfindung sieht vor, dass ein offenes oberes Ende des Rotors und ein geschlossenes unteres Ende des Rotors in Drehlagern am oberen und unteren Ende des Filterelements gelagert sind und dass das Filtrat durch das obere Drehlager hindurch unter Druck in das offene obere Ende des Rotors zuführbar ist. Dadurch bildet das obere Drehlager zugleich eine Drehdurchführung, durch die das Filtrat während der Drehung des Rotors in diesen zugeführt werden kann. Das untere Ende des Rotors ist geschlossen, so dass das gesamte zugeführte Filtrat zum Antrieb des Rotors und zur Rückspülung des Filterelements genutzt werden kann. Das obere Drehlager ist zweckmäßig ein KunststoffGleitlager, während das untere Drehlager zweckmäßig ein Kunststoff-Wälzlager ist.

Erfindungsgemäß umfasst der Rotor mindestens ein Paar parallele röhrenförmige, in Bezug zur Drehachse des Rotors und/oder der Längsmittelachse des Filterelements diametral angeordnete Rotorarme, die entlang ihrer Länge jeweils mit einer Mehrzahl der Spülöffnungen versehen sind. Die Spülöffnungen sind vorteilhaft Bohrungen in der Wand jedes röhrenförmigen Rotorarms, deren Mittelachsen erfindungsgemäß in horizontalen Schnittebenen durch die Mitten der Bohrungen mit dem Rotordurchmesser einen spitzen Winkel einschließen, vorzugsweise einen Winkel von weniger als 10 Grad. Dadurch übt im Rückspülbetrieb zum einen jeder aus einer Spülöffnung austretende Flüssigkeitsstrahl eine auf den Rotor einwirkende und den Rotor entgegen der Strömungsrichtung hydraulisch antreibende Rückstoßkraft aus. Zum anderen prallt der Flüssigkeitsstrahl während der Drehung des Rotors in Strömungsrichtung auf einen der Spülöffnung in geringem Abstand gegenüberliegenden ringförmigen Bereich an der Innenseite des hohlzylindrischen Filterelements, wodurch die an dessen Außenseite anhaftenden Feststoffpartikel abgespült werden.

Die Anzahl und Öffnungsweite der Spülöffnungen ist so gewählt, dass sich infolge des Strömungswiderstands in dem in den Rotor zugeführten Filtrat ein Druck aufbaut, der wiederum für eine ausreichende Strömungsgeschwindigkeit des Filtrats beim Austritt aus den Spülöffnungen sorgt.

Um zu erreichen, dass das Filterelement nach jedem Rückspülen wieder seinen Neuzustand einnimmt, und um zudem eine lange Lebensdauer des Filterelements sicherzustellen, ist erfindungsgemäß das Filterelement ein Siebfilterelement, das ein zu einer zylindrischen Röhre gebogenes siebartiges Filtergewebe aus nicht-rostendem Stahldraht umfasst. Das röhrenförmig gebogene Filtergewebe wird erfindungsgemäß von einem starren zylindrischen Filterkäfig des Filterelements gehalten, wobei sich seine entgegengesetzten Ränder in der Umfangsrichtung des zylindrischen Filterelements überlappen und vorteilhaft gegeneinander und gegen den Filterkäfig angepresst werden.

Zur Befestigung des röhrenförmig gebogenen Filtergewebes dienen zweckmäßig zwei oder mehr unter Vorspannung stehende, entlang der Länge des Filterelements im Abstand angeordnete ringförmig gebogene Halteschellen, die zweckmäßig aus nicht-rostendem Federstahl bestehen und das Filtergewebe von innen her gegen den Filterkäfig pressen. Darüber hinaus ist das Filtergewebe im Bereich seiner überlappenden Ränder ebenfalls am Filterkäfig des Filterelemente befestigt, vorteilhaft mit Hilfe mehrerer Schrauben, die von innen her durch Löcher in den überlappenden Rändern des Filtergewebes und eine den Überlappungsbereich überdeckende Schiene aus nicht-rostendem Stahl gegen den Filterkäfig angepresst werden. Der letztere ist vorteilhaft ebenfalls aus nicht-rostendem Stahl gefertigt, kann jedoch auch im 3D-Druck aus Kunststoff hergestellt werden.

Am oberen Ende des Filterelements ist zweckmäßig ein Deckel vorgesehen, der mit dem Filterelement verschraubt oder auf andere Weise lösbar mit dem Filterelement verbunden ist, so dass sich das Filterelement bei Bedarf zerlegen lässt. Der Deckel dient mit als Halterung für das Drehlager am oberen Ende des Rotors und trägt einen in Bezug zum Deckel drehfesten, an eine Spülpumpe angeschlossenen Rohrstutzen, durch den das Filtrat von der Spülpumpe unter Druck durch den Deckel und das obere Drehlager hindurch in das offene obere Ende des Rotors zugeführt werden kann.

Bei der erfindungsgemäßen Filtervorrichtung ist der Filter vorzugsweise oberhalb von einem Sedimentationstank in einem Filterbehälter angeordnet, wobei das offene untere Ende des Filterelements durch eine Öffnung im Boden des Filterbehälters mit dem Inneren des Sedimentationstanks kommuniziert. Auf diese Weise kann im Filtrationsbetrieb die im Filterelement gefilterte Flüssigkeit, d.h. das von Feststoffpartikeln weitgehend befreite Filtrat, durch Schwerkraft aus dem Inneren des Filterelements nach unten in den Sedimentationstank abfließen. Anschließend kann dann in dem im Sedimentationstank befindlichen beruhigten Filtrat eine Schwerkraftsedimentation von kleineren, bei der Filtration nicht vom Filterelement zurückgehaltenen Feststoffpartikeln stattfinden, um das Filtrat weiter zu klären.

Gemäß einer bevorzugten Ausgestaltung der Erfindung ist der Filterbehälter in Bezug zum Sedimentationstank schwenkbar. Auf diese Weise können sich die vom Filtermaterial zurückgehaltenen und beim Rückspülen von der Außenseite des Filterelements abgespülten Feststoffpartikel zuerst am Boden des Filterbehälters sammeln, um dann bei Bedarf durch Schwenken des Filterbehälters um mehr als 90 Grad aus dem letzteren ausgetragen zu werden.

Die Rückspülung des Filterelements bzw. des Filtermaterials wird vorteilhaft durch einen den Füllstand im Filterbehälter überwachenden Füllstandsensor ausgelöst, der im Zusammenwirken mit einer Anlagensteuerung der Filtervorrichtung für eine Zufuhr von Filtrat unter Druck in den Rotor sorgt, sobald ein maximaler vorbestimmter Füllstand innerhalb des Filterbehälters überschritten wird. Während des Filtrationsbetriebs steigt der Füllstand im Filterbehälter mit der Zeit an, weil das Filtermaterial infolge einer Ablagerung von Feststoffpartikeln an seiner Außenseite zunehmend undurchlässiger wird und dadurch pro Zeiteinheit weniger Flüssigkeit durch das Filterelement hindurchtreten kann.

Um im Falle eines Defekts des Füllstandsensors oder der Pumpe ein Überlaufen des Filterbehälters zu vermeiden, ist der Deckel des Filterelements mit mindestens einer Öffnung versehen, durch die in diesem Fall ungereinigte Flüssigkeit aus dem Filterbehälter am Filtermaterial vorbei ins Innere des Filterelements eintreten und von dort nach unten in den Sedimentationstank gelangen kann.

Außer dem Filterbehälter und dem Sedimentationstank umfasst die Filtervorrichtung noch einen neben dem Sedimentationstank angeordneten und mit dem Sedimentationstank kommunizierenden Vorratstank für Filtrat, sowie mehrere Pumpen.

Die Pumpen saugen Filtrat aus dem Vorratstank an und pumpen das angesaugte Filtrat zu einem oder zu mehreren Verbrauchern, wie z.B. Bearbeitungsmaschinen zum Schleifen von Brillengläsern. Eine der Pumpen pumpt darüber hinaus einen Teil des angesaugten Filtrats unter Druck in den Rotor des Filterelements, sobald der im Filterbehälter montierte Füllstandsensor anzeigt, dass der Flüssigkeitstand im Filterbehälter ein vorbestimmtes Niveau übersteigt.

Um einen Eintrag von Schaum aus dem Sedimentationstank in den Vorratstank zu vermeiden, kommuniziert der Sedimentationstank vorteilhaft mit dem unmittelbar neben dem Sedimentationstank angeordneten Vorratstank durch eine in Bodennähe angeordnete Verbindungsöffnung.

Im Folgenden wird die Erfindung anhand eines in der Zeichnung dargestellten Ausführungsbeispiels näher erläutert.
Fig. 1 ist eine perspektivische Ansicht einer erfindungsgemäßen Filtervorrichtung;
Fig. 2 ist eine Seitenansicht der Filtervorrichtung;
Fig. 3 ist eine vergrößerte Schnittansicht der Filtervorrichtung entlang der Linie A-A in Fig. 2 in einer Betriebsstellung des Filterbehälters;
Fig. 4 ist eine teilweise geschnittene Ansicht der Filtervorrichtung entsprechend Fig. 3, jedoch in einer Entleerstellung des Filterbehälters;

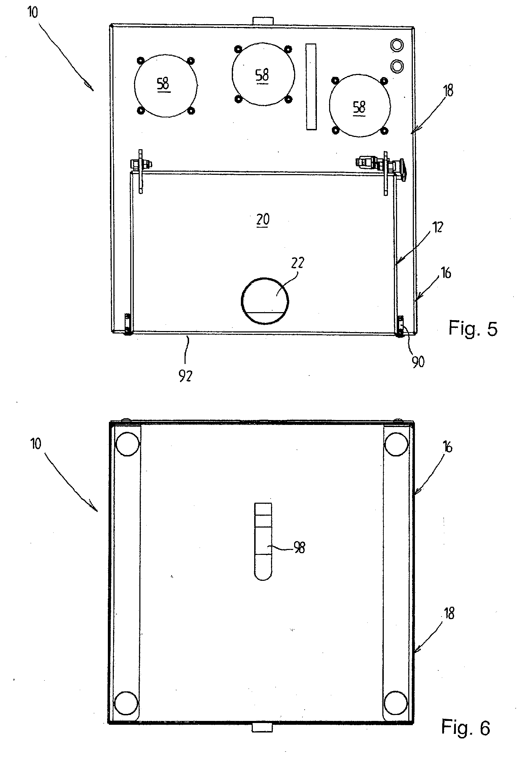

Fig. 5 ist eine Oberseitenansicht der Filtervorrichtung;
Fig. 6 ist eine Unterseitenansicht der Filtervorrichtung;

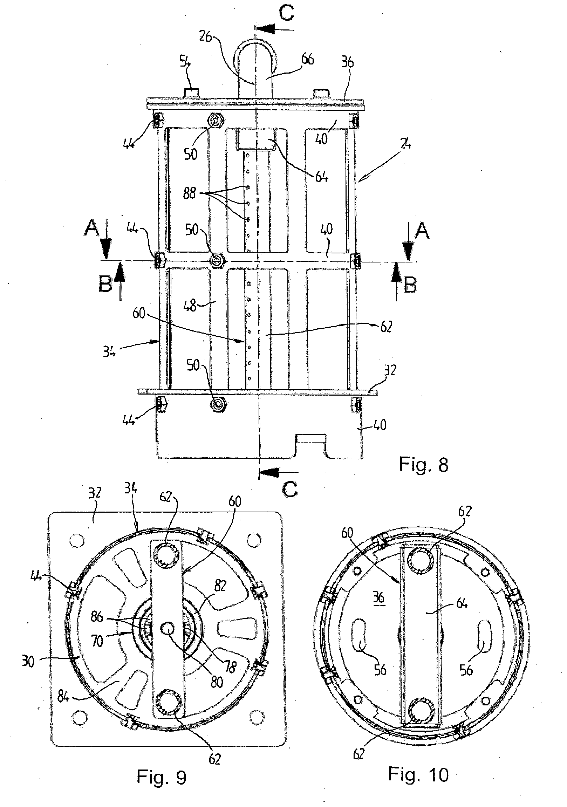

Fig. 7 ist vergrößerte Schnittansicht eines Filters im Filterbehälter entlang der Linie C-C der Fig. 8;
Fig. 8 ist eine Seitenansicht des Filters;
Fig. 9 ist eine Schnittansicht des Filters entlang der Linie A-A der Fig. 8;
Fig. 10 ist eine Schnittansicht des Filters entlang der Linie A-A der Fig. 8.

Die in der Zeichnung dargestellte Filtervorrichtung 10 dient zur Filtration einer wässrigen Schleifflüssigkeit, die in Optikerbetrieben beim Schleifen von Linsen an den verwendeten Schleifmaschinen anfällt. Die Filtervorrichtung 10 gestattet es, die Schleifflüssigkeit im Kreislauf zu führen, d.h. die gefilterte Schleifflüssigkeit wiederzuverwenden. Weiterhin gestattet es die Vorrichtung, bei der Filtration aus der Schleifflüssigkeit abgeschiedene, aus Kunststoff oder Glas bestehende Feststoffpartikel aufzufangen und damit einen Eintrag ins Abwasser zu vermeiden.

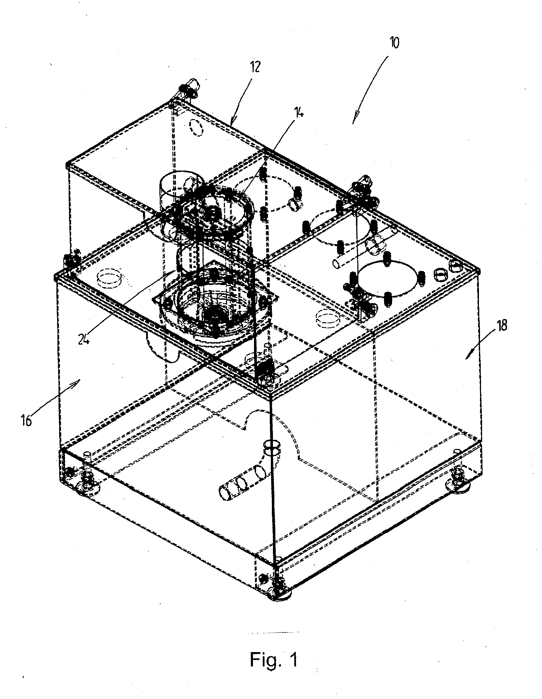

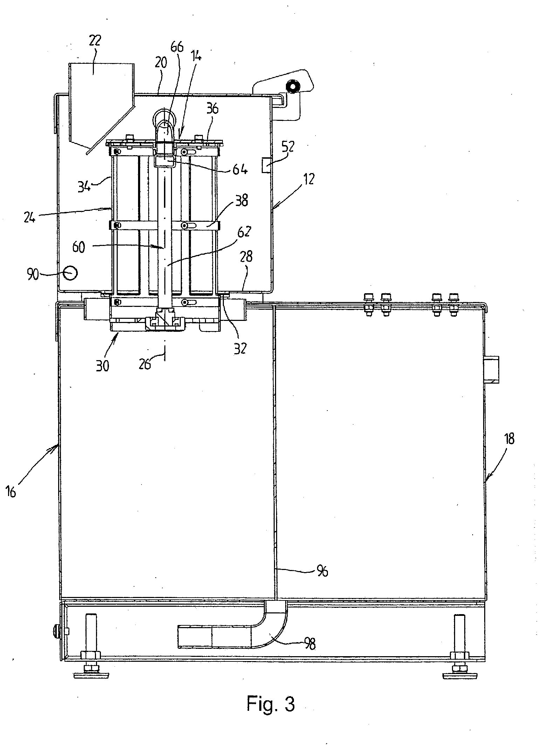

Wie am besten in Fig. 1 und 3 dargestellt, umfasst die Filtervorrichtung 10 einen Filterbehälter 12 mit einem Filter 14, einen unterhalb vom Filterbehälter 12 und vom Filter 14 angeordneten Sedimentationstank 16 und einen neben dem Sedimentationstank 16 angeordnete Vorratstank 18. Daneben umfasst die Filtervorrichtung 10 mehrere Pumpen und eine Anlagensteuerung, die in der Zeichnung zur Vereinfachung nicht dargestellt sind.

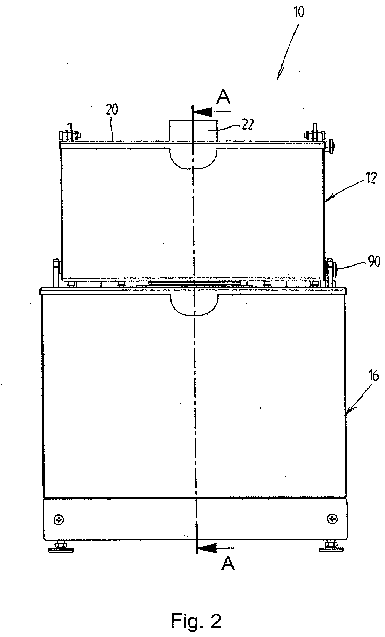

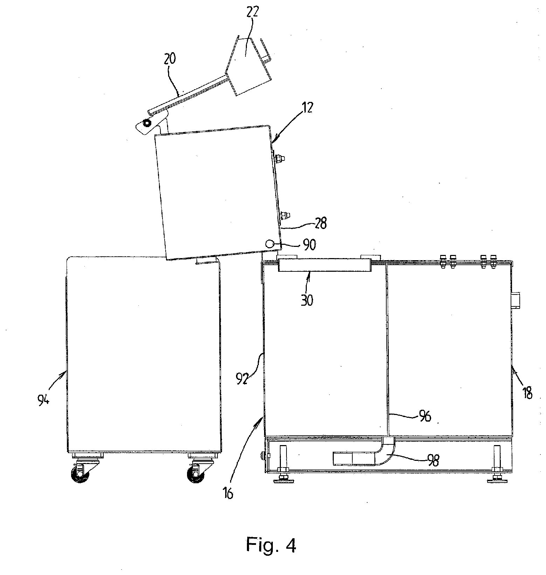

Wie am besten in Fig. 2, 3 und 4 dargestellt, ist der Filterbehälter 12 ein rechteckiger Kasten, der an seiner Oberseite einen Deckel 20 aufweist. Der Deckel 20 ist mit einem Einlaufstutzen 22 versehen, durch den die zu filternde Schleifflüssigkeit in den Filterbehälter 12 und zum Filter 14 zugeführt wird. Wie aus Fig. 3 und 4 ersichtlich ist, ist der Deckel 20 schwenkbar am Filterbehälter 12 montiert und lässt sich zum Entleeren des Filterbehälters 12 mitsamt dem Einlaufstutzen 22 in Bezug zum Filterbehälter 12 aus einer geschlossenen Betriebsstellung (Fig. 3) um etwa 240 Grad in eine geöffnete Entleerstellung (Fig. 4) schwenken.

Der Filter 14 ist starr mit dem Filterbehälter 12 verbunden und umfasst ein aufrechtes hohlzylindrisches Filterelement 24, dessen Längsmittelachse 26 senkrecht zum Boden 28 des Filterbehälters 12 ausgerichtet ist. Das Filterelement 24 wird von einer Halterung 30 getragen, die unterhalb des Bodens 28 des Filterbehälters 12 angeordnet ist, und ragt durch eine kreisförmige Öffnung im Boden 28 des Filterbehälters 12 nach oben in den Filterbehälter 12. Das Filterelement 24 ist nahe dem unteren Ende mit einer Flanschplatte 32 versehen, die von unten her gegen den Boden 28 des Filterbehälters 12 anliegt, an diesem festgeschraubt ist und entlang des Randes der Öffnung dichtend gegen den Boden 28 angepresst wird. Die Höhe des Filterelements 24 beträgt etwa 3/4 bis 4/5 der Höhe des Filterbehälters 12.

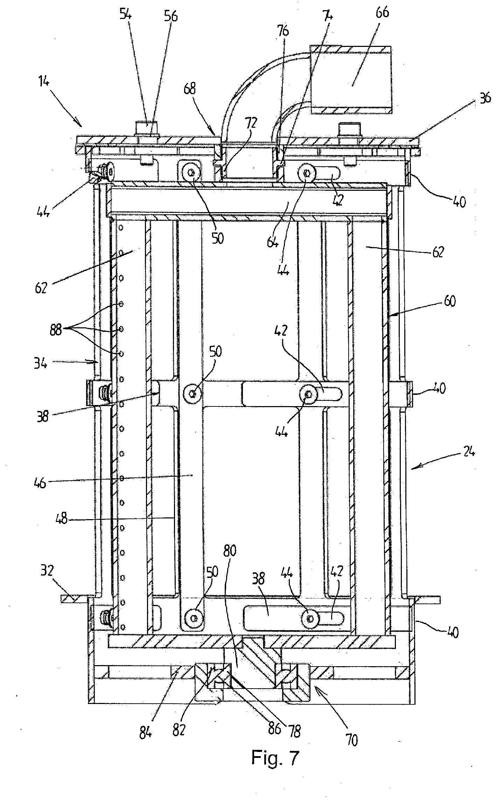

Wie am besten in Fig. 7 dargestellt, umfasst das Filterelement 24 einen starr mit der Flanschplatte 32 verbundenen zylindrischen Filterkäfig 34, der an seinem oberen Ende mit einem Deckel 36 versehen und an seinem unteren Ende offen ist. Der aus nicht-rostendem Stahl gefertigte Filterkäfig 34 dient als Halterung für ein zu einem Zylinder gebogenes Filtermaterial (in Fig. 7 nicht dargestellt), mit dem die Feststoffpartikel im Filtrationsbetrieb aus der Schleifflüssigkeit herausgefiltert werden.

Im Filtrationsbetrieb wird die mit Feststoffpartikeln beladene Schleifflüssigkeit durch den Einlaufstutzen 22 hindurch in den Filterbehälter 12 zugeführt, wo sie von außen nach innen durch das Filterelement 24 bzw. dessen Filtermaterial hindurchtritt und beim Hindurchtritt gefiltert wird. Das bei der Filtration der Schleifflüssigkeit entstehende Filtrat fließt durch seine Schwerkraft entlang der Innenseite des Filtermaterials nach unten und tropft oder strömt dann durch das offene untere Ende des Filterelements 24 und die offene Halterung 30 in den darunter befindlichen Sedimentationstank 16.

Das Filtermaterial besteht aus einem rechteckigen Filtergewebe aus nicht-rostendem Stahldraht, das zu einer zylindrischen Röhre gebogen ist, wobei sich benachbarte Ränder des Gewebes etwas überlappen.

Zur Befestigung des Filtergewebes am Filterkäfig 34 dienen drei unter Vorspannung stehende ringförmig gebogene Halteschellen 38, von denen jede das röhrenförmige Filtergewebe von innen her gegen einen umlaufenden Steg 40 des Filterkäfigs 34 anpresst. Die Halteschellen 38 sind mit Langlöchern 42 versehen, so dass sie sich nach dem Einsetzen des Filtergewebes mit Schrauben 44 am benachbarten Steg 40 des Filterkäfigs 34 festschrauben lassen. Die Schrauben 44 durchsetzen jeweils eines der Langlöcher 38 jeder Halteschelle 38 und eine entsprechende Durchgangsöffnung im Filtergewebe, so dass das Filtergewebe nach dem Festziehen der Schrauben 44 zwischen den Halteschellen 38 und den Stegen 40 festgeklemmt und fixiert wird.

Darüber hinaus werden die beiden zur Längsmittelachse 26 des Filterelements 24 parallelen überlappenden Seitenränder des Filtergewebes mittels einer geraden Halteschiene 46 aus nicht-rostendem Stahl von innen her gegen eine Längsstrebe 48 des Filterkäfigs 34 angepresst. Die Halteschiene 46 wird an der Längsstrebe 48 mit mehreren Halteschrauben 50 festgeschraubt, die sich durch Bohrungen der Schiene 46 und Durchgangsöffnungen in den überlappenden Rändern des Filtergewebes erstrecken. Auf diese Weise wird das Filtergewebe im Überlappungsbereich seiner Ränder zwischen der Halteschiene 46 und der Längsstrebe 48 fixiert und gegen den Filterkäfig 34 angepresst.

Da sich bei der Filtration der Schleifflüssigkeit die von dieser mitgeführten Feststoffpartikel mindestens teilweise an der Außenseite des Filtergewebes ablagern, wird das letztere mit der Zeit weniger durchlässig für das Filtrat, wodurch der Flüssigkeitsstand im Filterbehälter 12 ansteigt. Sobald der Flüssigkeitstand ein vorbestimmtes Niveau übersteigt, ist dies ein Anzeichen dafür, dass das Filtergewebe undurchlässig wird und gereinigt werden muss. Zu diesem Zweck wird von der Anlagensteuerung automatisch ein Rückspülbetrieb eingestellt, in dem das Filterelement 24 von innen nach außen und damit mit umgekehrter Strömungsrichtung wie im Filtrationsbetrieb mit Filtrat aus dem Vorratstank 18 rückgespült wird.

Zur Überwachung des Flüssigkeitstandes im Filterbehälter 12 dient ein mit der Anlagensteuerung verbundener Füllstandsensor 52 (Fig. 3), der etwas unterhalb vom Deckel 36 des Filterkäfigs 34 innen an einer Wand des Filterbehälters 12 montiert ist und ein Signal zur Anlagensteuerung zuführt, wenn der Flüssigkeitsstand bis zum Füllstandsensor 52 ansteigt.

Um zu vermeiden, dass der Filterbehälter 12 überläuft, zum Beispiel wenn der Füllstandsensor 52 infolge eines Defekts nicht ordnungsgemäß funktioniert, ist der mit Schrauben 54 am Filterkäfig 34 befestigte Deckel 36 mit Durchlassöffnungen 56 versehen, durch die ungefilterte Schleifflüssigkeit von oben her durch den Deckel 36 hindurch ins Innere des Filterelements 24 eintreten kann, wenn der Flüssigkeitsstand im Filterbehälter 12 über das Niveau des Deckels 36 hinaus ansteigen sollte.

Zur Rückspülung des Filterelements 24 ist dieses im Inneren mit einem hohlen, um die Längsmittelachse 26 drehbaren Rotor 60 ausgestattet, dem von einer der über einer Montageöffnung 58 an der Oberseite des Vorratstanks 18 montierten Pumpen (nicht dargestellt) Filtrat aus dem Vorratstank 18 unter Druck zugeführt werden kann.

Wie am besten in Fig. 7 dargestellt, weist der Rotor 60 zwei röhrenförmige Rotorarme 62 auf, die zur Längsmittelachse 26 parallel sind und sich im Inneren des Filterelements 24 diametral gegenüberliegen. Das untere Ende jedes Rotorarms 62 ist geschlossen, während die offenen oberen Enden der beiden Rotorarme 62 durch ein Verteilerrohr 64 miteinander und mit einem auf dem Deckel 36 des Filterkäfigs 34 montierten gekrümmten Rohrstutzen 66 verbunden sind, durch den das Filtrat in den Rotor 60 zugeführt wird.

Das obere und das untere Ende des Rotors 60 sind in einem oberen bzw. unteren Drehlager 68, 70 gelagert, wobei das obere Drehlager 68 als Gleitlager und das untere Drehlager 70 als Wälzlager ausgebildet ist. Das obere Drehlager 68 bildet zugleich eine Drehdurchführung, durch die das Filtrat aus dem ortsfesten Rohrstutzen 66 in den drehenden Rotor 60 strömt. Das obere Drehlager 68 umfasst eine vom Filtrat durchströmte radial innere Gleitlagerbuchse 72 mit einem nach außen überstehenden ringförmigen Bund 74, die in einem Gleitlagersitz 76 zwischen dem Deckel 36 und dem Rotor 60 axial unbeweglich und drehbar gelagert ist. Die Gleitlagerbuchse 72 ist unmittelbar oberhalb von dem Verteilerrohr 64 angeordnet, das unterhalb von der Gleitlagerbuchse 72 mit einer Eintrittsöffnung für das Filtrat versehen ist. Das unter Drehlager 70 umfasst einen Innenring 78 aus Kunststoff, der drehfest mit einem Wellenzapfen 80 am unteren Ende des Rotors 60 verbunden ist, einen Außenring 82 aus Kunststoff, der drehfest mit einer Querstrebe 84 der Halterung 30 verbunden ist, sowie Wälzkörper 86 aus nicht-rostendem Stahl oder Keramik zwischen dem Innen- und Außenring 78, 82.

Jeder der beiden Rotorarme 62 ist zwischen seinem oberen und unteren Ende mit einer Mehrzahl von Spülöffnungen 88 versehen, die jeweils in regelmäßigen Abständen in einer Reihe übereinander angeordnet sind. Die zylindrischen Spülöffnungen 88 durchsetzen die Wand des röhrenförmigen Rotorarms 62 und weisen parallele Mittelachsen auf. Diese letzteren sind nicht radial zur Längsmittelachse 26 ausgerichtet, sondern schließen mit dem Rotordurchmesser einen spitzen Winkel von etwas weniger als 10 Grad ein. Wenn im Rückspülbetrieb Filtrat unter Druck aus den Spülöffnungen 88 der Rotorarme 62 ausströmt, wird durch die geneigte Ausrichtung der Spülöffnungen 88 ein Drehmoment auf den Rotor 60 ausgeübt, der diesen hydraulisch antreibt und in Drehung versetzt. Gleichzeitig prallt das aus den Spülöffnungen 88 ausströmende Filtrat auf die in geringem Abstand gegenüberliegende Innenseite des Filtergewebes und tritt zumindest zu einem erheblichen Teil durch das Filtergewebe hindurch. Das durch das Filtergewebe hindurchtretende Filtrat sorgt dafür, dass die an der Außenseite des Filtergewebes anhaftenden Feststoffpartikel abgespült werden und sich am Boden des Filterbehälters 12 ansammeln.

Zum Entfernen der angesammelten Feststoffpartikel aus dem Filterbehälter 12 ist dieser um eine Schwenkachse 90 schwenkbar am Sedimentationstank 16 montiert. Die Schwenkachse 90 befindet sich in der Nähe des Bodens 28 des Filterbehälters 12 und in der Nähe einer fluchtenden Außenseite 92 des Filterbehälters 12 und des Sedimentationstanks 16, so dass der erstere zum Entleeren aus der Betriebsstellung (Fig. 3) um mehr als 90 Grad nach außen in die Entleerstellung (Fig. 4) geschwenkt werden kann. Wenn in der Entleerstellung der Deckel 20 mit dem Einlaufstutzen 22 vom offenen oberen Ende des Filterbehälters 12 weg geschwenkt ist (Fig. 4), kann der Filterbehälter 12 mühelos in einen Wagen 94 oder dergleichen entleert werden.

Der Sedimentationstank 16 dient zur Beruhigung des Filtrats nach dessen Eintritt in den Tank 16 und zudem zur Beseitigung einer eventuellen Schaumbildung an der Oberfläche des Filtrats im Sedimentationstank 16. Der Sedimentationstank 16 grenzt direkt an den Vorratstank 18 an, mit dem er durch eine in Bodennähe angeordnete halbkreisförmige Verbindungsöffnung 96 kommuniziert, um für einen Ausgleich der Pegelstände des Filtrats in den beiden Tanks 16, 18 zu sorgen.

Unmittelbar unterhalb von der Verbindungsöffnung 96 mündet am Boden der Tanks 16, 18 ein Ablassrohr 98, durch das bei Bedarf Sediment und/oder Filtrat aus den beiden Tanks 16, 18 abgelassen werden kann.

## Patentansprüche

1. Filter (14) zur Filtration einer Feststoffpartikel enthaltenden wässrigen Flüssigkeit, insbesondere einer beim Schleifen von Linsen in Optikerbetrieben anfallenden Schleifflüssigkeit, mit einem hohlzylindrischen, bei der Filtration von außen nach innen von der Flüssigkeit durchströmten Filterelement (24), sowie einem im Inneren des Filterelements (24) angeordneten, mit Spülöffnungen (88) versehenen drehbaren Rotor (60) zum Rückspülen des Filterelements (24), wobei Filtrat unter Druck in den Rotor (60) zuführbar ist, um durch das aus den Spülöffnungen (88) austretende Filtrat den Rotor (60) hydraulisch anzutreiben und das Filtrat während der Drehung des Rotors (60) zum Entfernen von Feststoffpartikeln von der Außenseite des Filterelements (24) gegen die Innenseite des Filterelements (24) zu spritzen, **dadurch gekennzeichnet, dass** das Filterelement (24) ein von einem zylindrischen Filterkäfig (34) gehaltenes Filtermaterial umfasst, das von einem röhrenförmig gebogenen ebenen Filtergewebe gebildet wird, dessen benachbarte Ränder sich überlappen.

2. Filter (14) nach Anspruch 1, **dadurch gekennzeichnet, dass** ein offenes oberes Ende des Rotors (60) und ein geschlossenes unteres Ende des Rotors (60) in einem oberen und einem unteren Drehlager (68, 70) an einem oberen und unteren Stirnende des Filterelements (24) gelagert sind und dass das Filtrat durch das obere Drehlager (68) hindurch unter Druck in das offene obere Ende des Rotors (60) zuführbar ist.

3. Filter (14) nach Anspruch 1 oder 2, **dadurch gekennzeichnet, dass** der Rotor (60) mindestens ein Paar parallele röhrenförmige Rotorarme (62) aufweist, die in Bezug zu einer vertikalen Drehachse (26) des Rotors (60) diametral angeordnet und entlang ihrer Länge jeweils mit einer Mehrzahl der Spülöffnungen (88) versehen sind, wobei Mittelachsen von mindestens einem Teil der Spülöffnungen (88) mit dem Rotordurchmesser einen spitzen Winkel einschließen.

4. Filter (14) nach einem der vorangehenden Ansprüche, **dadurch gekennzeichnet, dass** das röhrenförmig gebogene Filtergewebe durch mindestens zwei unter Vorspannung stehende ringförmig gebogene Halteschellen (38) von innen her gegen den Filterkäfig (34) angepresst wird.

5. Filter (14) nach einem der vorangehenden Ansprüche, **dadurch gekennzeichnet, dass** die überlappenden Ränder des Filtergewebes von innen her gegen den Filterkäfig (34) angepresst werden.

6. Filter (14) nach einem der vorangehenden Ansprüche, **dadurch gekennzeichnet, dass** das Filterelement (24) am oberen Ende einen Deckel (36) mit Durchlassöffnungen (56) aufweist, durch die Schleifflüssigkeit ins Innere des Filterelements (24) eintreten kann, bevor der Filterbehälter (12) überläuft.

7. Filtervorrichtung (10) zur Filtration einer Feststoffpartikel enthaltenden Flüssigkeit, insbesondere eines Kühlschmiermittels oder einer beim Schleifen von Linsen in Optikerbetrieben anfallenden Schleifflüssigkeit, **gekennzeichnet durch** einen Filter (14) nach Anspruch 1.

8. Filtervorrichtung (10) nach Anspruch 7, **gekennzeichnet durch** einen den Flüssigkeitsstand im Filterbehälter (12) überwachenden Füllstandsensor (52), der eine Rückspülung des Filterelements (24) durch Zufuhr von Filtrat unter Druck in den Rotor (60) auslöst, sobald der Flüssigkeitsstand im Filterbehälter (12) ein vorbestimmtes Niveau übersteigt.

9. Filtervorrichtung (10) nach Anspruch 7 oder 8, **dadurch gekennzeichnet, dass** der Filter (14) und das Filterelement (24) oberhalb von einem Sedimentationstank (16) angeordnet sind, in den das Filtrat aus dem offenen unteren Ende des Filterelements (24) abtropfen oder abfließen kann.

10. Filtervorrichtung (10) nach Anspruch 9, **dadurch gekennzeichnet, dass** der Filterbehälter (10) zusammen mit dem Filter (14) in Bezug zum Sedimentationstank (16) schwenkbar ist.

11. Filtervorrichtung (10) nach Anspruch 9 oder 10, **gekennzeichnet durch** einen neben dem Sedimentationstank (16) angeordneten und mit dem Sedimentationstank (16) kommunizierenden Vorratstank (18) für Filtrat, sowie eine Filtrat aus dem Vorratstank (18) ansaugende Pumpe, die Filtrat unter Druck in den Rotor (60) zuführt, sobald der Flüssigkeitsstand im Filterbehälter (12) ein vorbestimmtes Niveau übersteigt.

## Claims

1. Filter (14) for filtering an aqueous liquid containing solid particles, in particular a grinding liquid produced during grinding of lenses in optical companies, comprising a hollow-cylindrical filter element (24) through which the liquid flows from the outside inwards during filtration, as well as a rotatable rotor (60) arranged inside the filter element (24) and provided with flushing openings (88) for back-flushing the filter element (24), wherein filtrate can be supplied under pressure into the rotor (60) to hydraulically drive the rotor (60) by the filtrate exiting the flushing openings (88) and to spray the filtrate from the outside of the filter element (24) against the inside of the filter element (24) during rotation of the rotor (60) to remove solid particles, **characterised in that** the filter element (24) comprises a filter material held by a cylindrical filter cage (34), which is formed by a flat filter fabric bent in a tubular shape, the adjacent edges of which overlap.

2. Filter (14) according to claim 1, **characterised in that** an upper open end of the rotor (60) and a lower closed end of the rotor (60) are supported in an upper and a lower rotary bearing (68, 70) at an upper and a lower front end of the filter element (24), and filtrate can be supplied under pressure into the upper open end of the rotor (60) through the upper rotary bearing (68).

3. Filter (14) according to claim 1 or 2, **characterised in that** the rotor (60) has at least one pair of parallel tubular rotor arms (62) which are arranged diametrically with respect to a vertical axis of rotation (26) of the rotor (60) and are each provided along their length with a plurality of flushing openings (88), wherein central axes of at least some of the flushing openings (88) form an acute angle with the rotor diameter.

4. Filter (14) according to any one of the preceding claims, **characterised in that** the filter fabric bent in a tubular shape is pressed from the inside against the filter cage (34) by at least two retaining collars (38) bent in an annular shape and subjected to bias.

5. Filter (14) according to any one of the preceding claims, **characterised in that** the overlapping edges of the filter fabric are pressed from the inside against the filter cage (34) .

6. Filter (14) according to any one of the preceding claims, **characterised in that** the filter element (24) comprises, at the upper end, a cover (36) having passage openings (56) through which the grinding liquid can enter the interior of the filter element (24) before the filter container (12) overflows.

7. Filter device (10) for filtering a liquid containing solid particles, in particular a cooling lubricant or a grinding liquid formed during grinding of lenses in optical companies, **characterised by** a filter (14) according to claim 1.

8. Filter device (10) according to claim 7, **characterised by** a level sensor (52) monitoring the level of liquid in the filter container (12) and triggering back-flushing of the filter element (24) by supplying filtrate under pressure into the rotor (60) as soon as the level of liquid in the filter container (12) exceeds a predetermined level.

9. Filter device (10) according to claim 7 or 8, **characterised in that** the filter (14) and the filter element (24) are arranged above a sedimentation tank (16) into which the filtrate can drip or drain from the open lower end of the filter element (24).

10. Filter device (10) according to claim 9, **characterised in that** the filter container (10) can be pivoted together with the filter (14) with respect to the sedimentation tank (16) .

11. Filter device (10) according to claim 9 or 10, **characterised by** a storage tank (18) for filtrate, which is arranged next to the sedimentation tank (16) and communicates with the sedimentation tank (16), and a pump which sucks filtrate from the storage tank (18) and supplies filtrate under pressure into the rotor (60) as soon as the liquid level in the filter container (12) exceeds a predetermined level.

## Revendications

1. Filtre (14) pour la filtration d'un liquide aqueux contenant des particules solides, notamment d'un liquide de meulage formé lors du meulage de lentilles dans des entreprises d'optique, avec un élément filtrant cylindrique creux (24), traversé par le liquide de l'extérieur vers l'intérieur lors de la filtration, ainsi qu'un rotor rotatif (60) agencé à l'intérieur de l'élément filtrant (24), pourvu d'ouvertures de rinçage (88) pour le rinçage à contre-courant de l'élément filtrant (24), du filtrat pouvant être introduit sous pression dans le rotor (60), afin d'entraîner hydrauliquement le rotor (60) par le filtrat sortant des ouvertures de rinçage (88) et le filtrat étant pulvérisé du côté extérieur de l'élément filtrant (24) contre le côté intérieur de l'élément filtrant (24) pendant la rotation du rotor (60) pour éliminer les particules solides, **caractérisé en ce que** l'élément filtrant (24) comprend un matériau filtrant maintenu par un corps de filtre cylindrique (34), qui est formé par un tissu filtrant plan courbé sous forme tubulaire, dont les bords voisins se chevauchent.

2. Filtre (14) selon la revendication 1, **caractérisé en ce qu'**une extrémité supérieure ouverte du rotor (60) et une extrémité inférieure fermée du rotor (60) sont supportées dans un palier rotatif supérieur et un palier rotatif inférieur (68, 70) à une extrémité frontale supérieure et inférieure de l'élément filtrant (24), et **en ce que** le filtrat peut être introduit sous pression dans l'extrémité supérieure ouverte du rotor (60) à travers le palier rotatif supérieur (68).

3. Filtre (14) selon la revendication 1 ou 2, **caractérisé en ce que** le rotor (60) présente au moins une paire de bras de rotor tubulaires parallèles (62) qui sont agencés de manière diamétralement opposée par rapport à un axe de rotation vertical (26) du rotor (60) et qui sont munis le long de leur longueur chacun d'une pluralité des ouvertures de rinçage (88), les axes centraux d'au moins une partie des ouvertures de rinçage (88) formant un angle aigu avec le diamètre du rotor.

4. Filtre (14) selon l'une quelconque des revendications précédentes, **caractérisé en ce que** le tissu filtrant courbé sous forme tubulaire est pressé de l'intérieur contre le corps de filtre (34) par au moins deux colliers de maintien (38) courbés sous forme annulaire soumis à une précontrainte.

5. Filtre (14) selon l'une quelconque des revendications précédentes, **caractérisé en ce que** les bords se chevauchant du tissu filtrant sont pressés de l'intérieur contre le corps de filtre (34).

6. Filtre (14) selon l'une quelconque des revendications précédentes, **caractérisé en ce que** l'élément filtrant (24) présente à l'extrémité supérieure un couvercle (36) avec des ouvertures de passage (56) à travers lesquelles le liquide de meulage peut pénétrer à l'intérieur de l'élément filtrant (24) avant que le contenant de filtration (12) déborde.

7. Dispositif de filtration (10) pour la filtration d'un liquide contenant des particules solides, notamment d'un lubrifiant de refroidissement ou d'un liquide de meulage formé lors du meulage de lentilles dans des entreprises d'optique, **caractérisé par** un filtre (14) selon la revendication 1.

8. Dispositif de filtration (10) selon la revendication 7, **caractérisé par** un capteur de niveau de remplissage (52) surveillant le niveau de liquide dans le contenant de filtration (12), qui déclenche un rinçage à contre-courant de l'élément filtrant (24) par introduction de filtrat sous pression dans le rotor (60) dès que le niveau de liquide dans le contenant de filtration (12) dépasse un niveau prédéterminé.

9. Dispositif de filtration (10) selon la revendication 7 ou 8, **caractérisé en ce que** le filtre (14) et l'élément filtrant (24) sont agencés au-dessus d'un réservoir de sédimentation (16), dans lequel le filtrat peut s'égoutter ou s'écouler de l'extrémité inférieure ouverte de l'élément filtrant (24).

10. Dispositif de filtration (10) selon la revendication 9, **caractérisé en ce que** le contenant de filtration (10) peut pivoter conjointement avec le filtre (14) par rapport au réservoir de sédimentation (16).

11. Dispositif de filtration (10) selon la revendication 9 ou 10, **caractérisé par** un réservoir de stockage (18) pour le filtrat, agencé à côté du réservoir de sédimentation (16) et communiquant avec le réservoir de sédimentation (16), ainsi qu'une pompe aspirant le filtrat du réservoir de stockage (18), qui introduit du filtrat sous pression dans le rotor (60) dès que le niveau de liquide dans le contenant de filtration (12) dépasse un niveau prédéterminé.
